# EUROPEAN PATENT APPLICATION

(11) **EP 3 385 900 A1**
(43) Date of publication of application: **10.10.2018**
(21) Application number: 15909853.2
(22) Date of filing: 08.12.2015
(51) Int. Cl.: G06Q 50/20, G09B 19/06

(54) **SYSTEM AND METHOD FOR ONLINE LANGUAGE EDUCATION BETWEEN PEERS**

(30) Priority: 04.12.2015 KR 20150172427
(71) Applicant: Choi, Sun Woo, Seoul 08646 (KR); Park, Je Kwang, Uiwang-si, Gyeonggi-do 16049 (KR)
(72) Inventor: Choi, Sun Woo, Seoul 08646 (KR); Park, Je Kwang, Uiwang-si, Gyeonggi-do 16049 (KR)
(74) Representative: RatnerPrestia
(86) International application number: PCT/KR2015/013371
(87) International publication number: WO 2017/094946

(57) **Abstract**

A system and a method for online language education between peers are disclosed. The system comprises: a user profile database which previously stores a user profile including the age, gender, and nationality of a user, a native language, a subject foreign language, the proficiency level of the subject foreign language, and whether the user is bilingual; a tutor's terminal which transmits or receives a video chat request for a predetermined content or topic to allow a first user to play a role as a tutor for teaching the native language of the first user as a foreign language, receives an acceptance from a second user or gives an acceptance to the second user in response to the video chat request, receives a predetermined cost, and performs a video chat; a tutee's terminal which transmits or receives the video chat request for the content or topic to allow the second user to play a role as a tutee for learning the native language of the first user as a foreign language, receives an acceptance from the first user or gives an acceptance to the first user in response to the video chat request, pays the cost, and performs a video chat; and an online foreign language education server which posts the user profile previously stored in the user profile database and the content or topic set by the user online and establishes a video chat session between the tutor's terminal and the tutee's terminal in response to the video chat request between the tutor's terminal and the tutee's terminal.

## Description

### Technical field

The present disclosure relates to a system and a method for online language education, and more specifically, to a system and a method for online language education between peers.

### Background art

There are a variety of conventional systems implemented for online foreign language education.

However, most online education methods as well as offline education method are not free from the fixed frame between teacher and student. In this frame, the teacher unilaterally teaches a foreign language and the student unilaterally accepts it.

Korean Patent Laid-open No. 10-2008-0078623 discloses an online English language education by native speakers as a way of online foreign language education service. However, considering the fact that the service provides the lectures previously prepared in overseas broadcasting room, such education method is not significantly different from the unilateral education method mentioned above.

Meanwhile, Korean Patent Registration Publication No. 10-0755417 discloses a method that allows a learner to participate actively in education to some extent. However, again, learners study the content or programs prepared previously and speaks or writes texts according to the content or programs. That is, in terms of providing content and programs unilaterally, this is also not greatly different from the conventional frame mentioned above.

In addition, since such content and programs are somewhat stereotyped or uniform, it is in fact difficult to use the learned expressions as they are often useless in conversations exchanged in colloquial language.

Some learners chose to learn language using education service that provides free-talking sessions with native speakers on telephones. However, because the native speaker instructors of such native speaker telephone services are professionally trained instructors, there is a problem that the learners feel awkward and hesitate to have free and comfortable conversation with them. Most professional native speaker instructors are mostly adults, and leaners may greatly vary from the native speaker instructors such as age difference, gender difference, generation gap, difference in way of thinking and interest, etc. Indeed, in such a case, it would be impossible to find common interest and have serious and profound conversations about that. That is, the conversation will not be authentic. It is not expected to improve the quality or level of foreign language learning with such superficial conversation.

In summary, the existing offline and online foreign language education is conducted routinely based on predetermined learning materials or is conducted by a professional instructor in a one-sided learning manner, such that there is considerable difficulty for learners to participate in free learning setting and improve their skills. In addition, in the case of the one-to-one free-talking learning method, interactive learning may be induced by free conversation with a professional language instructor. However, there is a problem that it is difficult to form a consensus due to differences in age, interest, generation, gender, knowledge, and so on, in which case the session will end after just superficial conversation. In particular, in such cases, it is difficult for underage students to form consensus through conversation with language instructors who are adults, and as a result, there is a limit to expecting improvement of foreign language level.

### DETAILED DESCRIPTION

### Technical Problem

An objective of the present disclosure is to provide a system for online language education between peers.

Another objective of the present disclosure is to provide a method for online language education between peers.

### Technical Solution

The system for online language education between peers according to the objective of the present disclosure described above may be configured to include a user profile database which previously stores a user profile including the age, gender, and nationality of a user, a native language, a subject foreign language, the proficiency level of the subject foreign language, and whether the user is bilingual; a tutor's terminal which transmits or receives a video chat request for a predetermined content or topic to allow a first user to play a role as a tutor for teaching the native language of the first user as a foreign language, receives an acceptance from a second user or gives an acceptance to the second user in response to the video chat request, receives a predetermined cost, and performs a video chat; a tutee's terminal which transmits or receives the video chat request for the content or topic to allow the second user to play a role as a tutee for learning the native language of the first user as a foreign language, receives an acceptance from the first user or gives an acceptance to the first user in response to the video chat request, pays the cost, and performs a video chat; and an online foreign language education server which posts the user profile previously stored in the user profile database and the content or topic set by the user online, and establishes a video chat session between the tutor's terminal and the tutee's terminal in response to the video chat request between the tutor's terminal and the tutee's terminal,

In an example, the online foreign language education server may be configured to search a user and provide the result to the corresponding tutor's terminal or tutee's terminal so that a video chat may be performed between peers who are different by less than a predetermined age difference based on the age included in the user profile.

In an example, in order to allow the second user to pay the cost for the video chat education to the first user, the online foreign language education server is configured to previously deposit a predetermined amount received from the tutee's terminal, change the deposited amount into a virtual currency, and provide the changed virtual currency to the tutee's terminal, and when the tutee's terminal pays the cost by the virtual currency, to provide the corresponding virtual currency to the tutor's terminal, and when the request to change virtual currency into real money and to withdraw the real money is received from the tutor's terminal, to change the virtual currency into real money and provide the changed money to the tutor's terminal, wherein in order to use it for peers of underdeveloped region according to a predetermined criterion, the online foreign language education server receives a donation of a certain amount of the changed real money based on a rate as designated by the first user.

According to another objective of the present disclosure described above, a method for online language education between peers is provided, which may include steps of: at an online foreign language education server, posting online a user profile previously stored in a user profile database including the age, gender, and nationality of a user, a native language, a subject foreign language, the proficiency level of the subject foreign language, and whether the user is bilingual, together with a predetermined content or topic designated by a corresponding user in real time; at a tutor's terminal, transmitting a video chat request for the content or topic to play a role as a tutor so that the first user may play a role as a tutor for teaching the native language of the first user as a foreign language, or at a tutee's terminal, transmitting a video chat request for the content or topic so that the second user may play a role as a tutee to learn the native language of the first user as a foreign language; at the tutor's terminal, accepting the video chat request in response to the video chat request from the tutee's terminal or at the tutee's terminal, accepting the video chat request in response to the video chat request from the tutor's terminal; at the tutee's terminal, when the video chat request is accepted, paying a predetermined cost for the video chat to the tutor's terminal, and at the online foreign language education server, establishing a video chat session between the tutor's terminal and the tutee's terminal so that the first user and the second user can perform the video chat with each other.

In an example, the step at the online foreign language education server of posting online a user profile previously stored in a user profile database including the age, gender, and nationality of a user, a native language, whether the user is a tutor or a tutee, a subject foreign language, the proficiency level of the subject foreign language, and whether the user is bilingual, together with a predetermined content or topic designated by a corresponding user in real time may include steps of at the online foreign language education server, searching a user and providing the result to the corresponding tutor's terminal or tutee's terminal so that the video chat is performed between peers who are different by less than a predetermined age difference based on the age included in the user profile.

In addition, at the tutee's terminal, when the video chat request is accepted, a predetermined cost for the video chat is paid to the tutor's terminal, and the step at online foreign language education server of establishing a video chat session between the tutor's terminal and the tutee's terminal so that the first user and the second user may perform video chat with each other may include, in order to allow the second user to pay a cost for the video chat education to the first user, to previously deposit a predetermined amount received from the tutee's terminal, change the deposited amount into a virtual currency, and provide the changed virtual currency to the tutee's terminal, and when the tutee's terminal pays the cost by the virtual currency, to provide the corresponding virtual currency to the tutor's terminal.

Meanwhile, the method may additionally include, when the tutor's terminal makes a request to change the provided virtual currency into real money and withdraw the money, at the online foreign language education server, changing the virtual currency into real money and providing the real money, and in order to use it for peers of underdeveloped region according to a predetermined criterion, receiving, from the tutor's terminal, a donation of a certain the amount of the changed real money based on a rate as designated by the first user.

### Advantageous Effects

According to a system and a method for online language education between peers described above, since the foreign language learning is configured to enable free talking-based foreign language learning among online users as either a tutor or a tutee, there is an effect that anyone can improve the quality of foreign language ability through bilingual free language learning with native speakers.

In particular, there is an effect that since the learners in the similar peer group are allowed to freely talk about common interests, it is easy to establish mutual consensus among the learners and naturally lead to deep and interesting conversation, and thus enhance the foreign language ability on various subjects and interests.

In addition, there is an effect that users are able to access foreign language easily and intimately, because they learn the general way the similar peer group talk and also the colloquial style.

In addition, there may be an effect of providing free online language education opportunities for children and peers around the world in underdeveloped region by allowing a user playing a role as a tutor who teaches his/her native language to be provided with the tuition fee from a tutee and donate portion of the fee.

For the user's part, there is an effect that the user is provided with an opportunity to freely learn a foreign language without being burdened with the cost, since the user may serve as both a tutee who learns a foreign language and a tutor who teaches his/her native language.

### BRIEF DESCRIPTION OF THE DRAWINGS

The above and other objects, features and advantages of the present disclosure will become more apparent to those of ordinary skill in the art by describing in detail exemplary embodiments thereof with reference to the accompanying drawings, in which:
FIG. 1 is a block diagram of a system for online language education between peers according to an embodiment of the present disclosure; and
FIG. 2 is a flowchart of a method for online language education between peers according to an embodiment of the present disclosure.

### BEST MODE

Various modifications may be made to exemplary embodiments of the present disclosure, and certain exemplary embodiments will be described below in detail with reference to attached drawings. However, it should be understood that the disclosure is not to be limited to the specific embodiments, but includes all modifications, equivalents, and alternatives falling within the spirit and scope of the disclosure. The like reference numerals are used for similar elements in describing each of the drawings.

The expression, "first," "second," and so on may be used in describing a variety of elements, but these elements should not be limited to the expression. The expressions are used only for the purpose of distinguishing one element from another. For example, without departing from the scope of the present disclosure, a first component may be referred to as a second component, and similarly, the second component may also be referred to as the first component. The expression "and/or" includes any combination of a plurality of associated listed items or any of a plurality of associated listed items.

It should be understood that when an element is referred to as being "connected" or "coupled" to another element, it may be directly connected or coupled to another element, with or without yet another element being present in between. On the other hand, it should be understood that when an element is referred to as being "directly connected" or "directly coupled" to another element, there are no other element present in between.

The expressions used herein are only for describing certain exemplary embodiments, and not intended to limit the scope of the disclosure. Unless otherwise specified, a singular expression includes a plural expression. The expression "comprise" or "have" as used herein is intended to designate an existence of steps, operations, elements, components or a combination of these, and accordingly, this should not be understood as precluding an existence or a possibility of adding one or more of other characteristics, numbers, steps, operations, elements, components or a combination of these.

Unless defined otherwise, all expressions used herein, including technical or scientific expressions, have the same meaning as commonly understood by one of ordinary skill in the art to which this disclosure belongs. Expressions such as those defined in commonly used dictionaries should be interpreted as having a meaning consistent with the meaning in the context of the relevant art and are to be interpreted as ideal or overly formal in meaning unless explicitly defined in the present application.

Hereinafter, preferred embodiments according to the present disclosure will be described in detail with reference to the accompanying drawings.

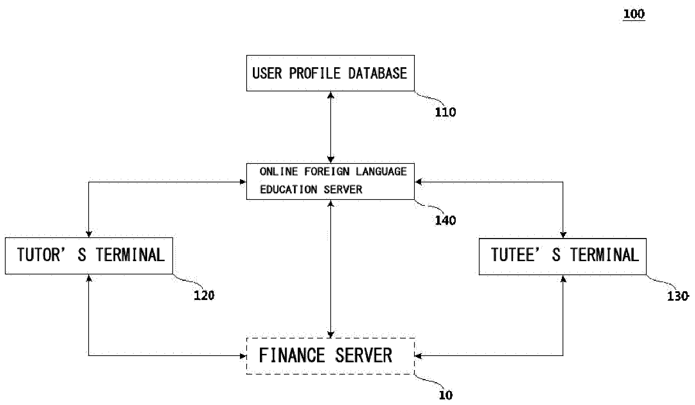

FIG. 1 is a block diagram of a system for online language education between peers according to an embodiment of the present disclosure.

Referring to FIG.1, a system 100 for online language education between peers according to an exemplary embodiment of the present disclosure may be configured to include a user profile database 110, a tutor's terminal 120, a tutee's terminal 130 and an online foreign language education server 140.

The system 100 for online language education between peers is configured to allow users to teach and learn a native speaker's language, in which any user may become a tutor of his/her native language or become a tutee of a foreign language.

Rather than one-sided teaching method performed by the professional foreign language instructors, or classes performed based on previously prepared learning materials, peers are able to learn a language while they freely communicate with each other based on common interests or subjects.

The system 100 for online language education between peers also has an advantage that it can easily form mutual consensus among peers, thus allowing learners to improve a foreign language proficiency as they share a deep and genuine conversation in foreign language instead of superficial conversation.

Furthermore, in the system 100 for online language education, the user may be a tutor who receives tuition fee from a tutee, and also be a tutor in which case the user may learn a foreign language using the received tuition fee, and accordingly, the user is able to receive education without the burden of cost. A user who earns fee as a tutor is able to donate portion of the fee, thus providing opportunities to the peers or other users in the underdeveloped region to learn a foreign language free of charge. This is meaningful for a certain user whose native language is less interesting to the other users, because in that case, it is less likely that the certain user would earn tuition fee as a tutor.

Hereinafter, the detailed configuration will be described.

The user profile database 110 may be configured to previously store a user profile including the age, gender, and nationality of a user, a native language, a subject foreign language, the proficiency level of the subject foreign language, and whether the user is bilingual.

The user profile may also include various personal information about the user such as interest, specialty, personality, hobby, taste, and so on. Such user profile may be a reference for the user to select another user as a tutor or tutee.

The user profile may be uploaded from the tutor's terminal 120 or the tutee's terminal 130, and uploaded or renewed via the online foreign language education server 140.

The tutor's terminal 120 or the tutee's terminal 130 is a user's terminal.

The user's terminal may be a tutor's terminal 120 or a tutee's terminal 130 depending on whether the user's role is a tutor or a tutor.

The tutor's terminal 120 is a terminal for the first user to play a role as a tutor for teaching the native language of the first user as a foreign language.

The tutor's terminal 120 may be configured to transmit a video chat request for a predetermined content or topic to the tutee's terminal 130, or to receive a video chat request for the content or topic from the tutee's terminal 130.

In an example, rather than any learning material, the "content" or "topic" means something that is of interest, or something that has happened today, or a particular topic. That is, this is to provide in advance information about the conversation to be shared between the tutor and the tutee. For example, it could be a wide range of broad or specific topics or content, such as today's fun event or funny thing, or sad thing, a topic for recent accidents or terrorism, a specific online game, school life, fashion, computer science, and so on. There is no limit to any range or type.

In response to the video chat request, the tutor's terminal 120 may be configured to receive an acceptance from the tutee's terminal 130 of the second user, or give an acceptance to the tutee's terminal 130 of the second user, receive a predetermined fee, and perform video chat.

In an example, the fee is a kind of tuition fee that the first user as a tutor receives in exchange for teaching a foreign language.

The fee may be paid in virtual currency, which is changed into real money. The tutee's terminal 130 may have previously changed a certain amount of real money into a corresponding amount of virtual currency and pay with the changed virtual currency.

The tutee's terminal 130 is a terminal for the second user to play a role as a tutee who learns the native language of the first user as a foreign language.

The tutee's terminal 130 may be configured to transmit a video chat request for content or a topic to the tutor's terminal 120, or to receive a video chat request for the content or topic from the tutor's terminal 120.

In response to the video chat request described above, the tutor's terminal 130 may be configured to receive an acceptance from the tutee's terminal 120 of the first user or to give an acceptance to the tutee's terminal 120 of the first user, pay a predetermined fee, and perform video chat.

The fees may be estimated differently according to education times, or the local time zones of the tutors, or foreign languages, respectively. The fee may be higher when the education time is longer, and the fee may be higher when the local time of the tutor is night time. Further, the fee may be set at the higher rate for a certain foreign language when there are more users who want to learn the certain foreign language.

The online foreign language education server 140 is configured to relay online education between the tutor's terminal 120 and the tutee's terminal 130.

The online foreign language education server 140 may be configured to post online the user profile previously stored in the user profile database 110, together with the content or topic set by the user in real time. Both the first user or the second user may be allowed to view the user profile, the content, and the topic and select a partner of the conversation. In an example, the local time or region of the tutor or tutee may be posted together.

In addition, the tutee's terminal 130 may be configured to upload and post the tendency of the first user (i.e., tutor) of the second user's foreign language education or training to the online foreign language education server 14. After the video chat is finished, the tendency of that tutor may be selectively indicated as 'kind', 'friendly', 'punctual', 'outgoing' and so on so that other tutees may refer to it when selecting their tutor.

Meanwhile, the online foreign language education server 140 may be configured to provide different user lists for each user. The online foreign language education server 140 may provide an environment in which a video chat may be performed between peers who are different by less than a predetermined age difference based on the age included in the user profile.

The online foreign language education server 140 may be configured to generate a user list composed of similar peer users through the user profile and provide the user list to the corresponding tutor's terminals 120 or the tutee's terminals 130, respectively.

As users are led to a conversation with peers with each other, they easily form a consensus during the conversation. The conventional education method, in which 12- or 13-year-old users have free-talking session with a professional instructor who is over 30 years old, has a limit. It is difficult for the conversation to be smooth and the conversation may not be continued for a long time. However, in the present disclosure, the peers speak and learn a language with the expressions actually used by the peers in the course of stimulating and satisfying each other's curiosity. Even among those who use the same language, a variety of differentiated colloquial languages are used depending on the age, gender, educational background, regional culture, and settings, and accordingly, it is needless to mention how it would be senseless for 12- or 13-year-olds to learn foreign language used by adults. The present disclosure can provide an optimal solution that aids learners to speak a language appropriate to the age.

The online foreign language education server 140 may be configured to intercommunicate video chat requests between the tutor's terminal 120 and the tutee's terminal 130 and to establish a video chat session between the tutor's terminal 120 and the tutee's terminal 130 in response thereto.

Meanwhile, the tutor's terminal 120 and the tutee's terminal 130 may be configured to set a video chat start time with each other in advance, and the online foreign language education server 140 may be configured to output an alarm to the tutor's terminal 120 and the tutee's terminal 130 at a predetermined time to notify the tutor and the tutee of the video chat start time, respectively.

In addition, the tutor's terminal 120 and the tutee's terminal 130 may be configured to schedule video chat between the tutor and the tutee for one hour at 8 o'clock in the evening every day and to set the scheduling in the online foreign language education server 140. The online foreign language education server 140 may be configured to output an alarm to the tutor's terminal 120 and the tutee's terminal 130 when it is the scheduled time. In addition, the tutor's terminal 120 and the tutee's terminal 130 are configured to output a scheduled time according to the scheduling through a pop-up message each time users log in to an application according to the present disclosure.

In addition, when the tutor's terminal 120 and the tutee's terminal 130 are in an offline state, the online foreign language education server 140 may be configured to transmit an alarm according to the scheduled time or an alarm according to the appointment time to the tutor's terminal 120 or tutee's terminal 130 via a text message. Accordingly, the tutor's terminal 120 or the tutee's terminal 130 may easily confirm the time and not miss the video chat time even when in offline state.

Meanwhile, in the tutor's terminal 120, the tutor may evaluate the age level corresponding to the language level of the tutee based on comparison with the users of the same native language as the tutor, and provide the evaluation to the tutee. With the evaluation of the tutor, the tutee may keep track of the progress of his/her language level.

Meanwhile, the online foreign language education server 140 may be configured to previously deposit a predetermined amount of money received from the tutee's terminal 130 and change the money into virtual currency in order to allow the second user to pay the cost for the video chat education to the first user. The changed virtual currency may be deposited in the account of the second user and the second user may use it at any time during online education.

The online foreign language education server 140 may be configured to provide the virtual currency to the tutor's terminal 120 when the tutee's terminal 130 pays the cost for the online education using the virtual currency. That is, the server 140 may be configured to deposit in the account of the first user.

The tutor's terminal 120 may make a request to change the virtual currency deposited in the account into real money and withdraw the money, in which case the online foreign language education server 140 may be configured to change the virtual currency into the real money through a financial server 10 and provide the money to the financial account of the first user. At this time, the online foreign language education server 140 may be configured to receive the donation of certain amount of the changed real money according to a rate as designated by the first user. The online foreign language education server 140 may be configured to use the donated amount as an online tuition fee for peers in the underdeveloped region.

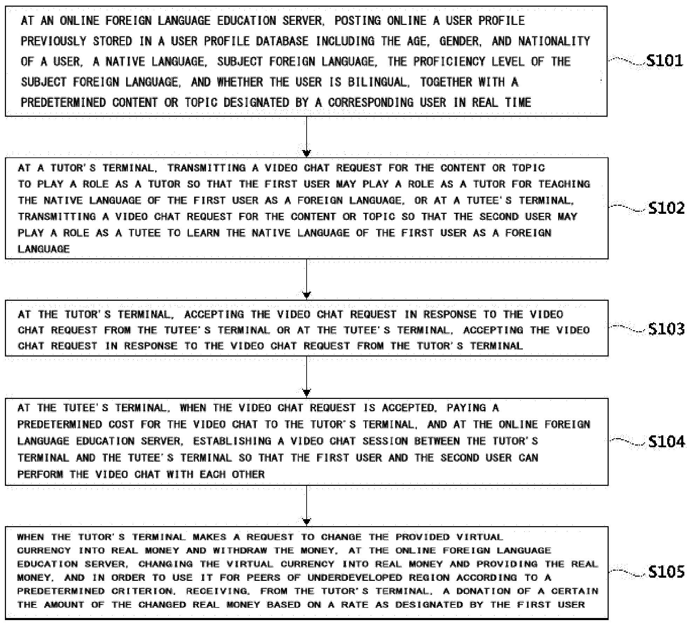

FIG. 2 is a flowchart of a method for online language education between peers according to an embodiment of the present disclosure.

Referring to FIG. 2, at S101, an online foreign language education server first posts online a user profile previously stored in a user profile database, including the age, gender, and nationality of a user, a native language, whether a user is a tutor or a tutee, a subject foreign language, the proficiency level of the subject foreign language, and whether the user is bilingual, together with a predetermined content or topic designated by a corresponding user in real time.

At this time, the online foreign language education server 140 may be configured to search a user and provide the result to the corresponding tutor's terminal or tutee's terminal so that a video chat may be performed between peers who are different by less than a predetermined age difference based on the age included in the user profile.

Next, at S102, the tutor's terminal 120 may transmit a video chat request for content or topic so that the first user may play a role as a tutor for teaching the native language of the first user as a foreign language, or the tutee's terminal 130 may transmit a video chat request for content or topic so that the second user may play a role as a tutee to learn the native language of the first user as a foreign language.

Next, at S103, the tutor's terminal 120 accepts in response to the video chat request of the tutee's terminal 130 or the tutee's terminal 130 accepts in response to the video chat request of the tutor's terminal 120.

Next, at S104, when the video chat request is accepted, the tutee's terminal 130 pays a predetermined cost for the video chat to the tutor's terminal 120, and the online foreign language education server 140 establishes a video chat session between the tutor's terminal 120 and the tutee's terminal 130 so that the first user and the second user may perform video chat with each other.

In an example, in order to allow the second user to pay the cost for the video chat education to the first user, the online foreign language education server 140 may be configured to previously deposit a predetermined amount received from the tutee's terminal, change the deposited amount into the virtual currency, and provide the changed virtual currency to the tutee's terminal, and when the tutee's terminal pays the cost by the virtual currency, provide the corresponding virtual currency to the tutor's terminal 120.

Next, when the tutor's terminal 120 makes a request to change the provided virtual currency into real money and withdraw the money, the online foreign language education server 140 changes the virtual currency into real money and provides the real money, and in order to use it for peers of underdeveloped region according to a predetermined criterion, the online foreign language education server 140 may receive a donation of a certain amount of the changed real money based on a rate as designated by the first user.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### [Industrial applicability]

The present disclosure relates to a system and a method for online language education and applicable to an online language education market.

## Claims

1. A system for online language education between peers, comprising:
a user profile database which previously stores a user profile including the age, gender, and nationality of a user, a native language, a subject foreign language, the proficiency level of the subject foreign language, and whether the user is bilingual;
a tutor's terminal which transmits or receives a video chat request for a predetermined content or topic to allow a first user to play a role as a tutor for teaching the native language of the first user as a foreign language, receives an acceptance from a second user or gives an acceptance to the second user in response to the video chat request, receives a predetermined cost, and performs a video chat;
a tutee's terminal which transmits or receives the video chat request for the content or topic to allow the second user to play a role as a tutee for learning the native language of the first user as a foreign language, receives an acceptance from the first user or gives an acceptance to the first user in response to the video chat request, pays the cost, and performs a video chat;
and an online foreign language education server which posts the user profile previously stored in the user profile database and the content or topic set by the user online, and establishes a video chat session between the tutor's terminal and the tutee's terminal in response to the video chat request between the tutor's terminal and the tutee's terminal,
wherein the online foreign language education server searches a user and provides a result to a corresponding tutor's terminal or tutee's terminal so that a video chat may be performed between peers who are different by less than a predetermined age difference with reference to the age included in the user profile.

2. The system of claim 1, wherein, in order to allow the second user to pay a cost for the video chat education to the first user, the online foreign language education server is configured to previously deposit a predetermined amount received from the tutee's terminal, change the deposited amount into a virtual currency, and provide the changed virtual currency to the tutee's terminal, and when the tutee's terminal pays the cost by the virtual currency, to provide the corresponding virtual currency to the tutor's terminal, and when the request to change virtual currency into real money and to withdraw the real money is received from the tutor's terminal, to change the virtual currency into real money and provide the changed money to the tutor's terminal, wherein in order to use it for peers of underdeveloped region according to a predetermined criterion, the online foreign language education server receives a donation of a certain amount of the changed real money based on a rate as designated by the first user.

3. A method for online language education between peers, comprising steps of:
at an online foreign language education server, posting online a user profile previously stored in a user profile database including the age, gender, and nationality of a user, a native language, a subject foreign language, the proficiency level of the subject foreign language, and whether the user is bilingual, together with a predetermined content or topic designated by a corresponding user in real time;
at a tutor's terminal, transmitting a video chat request for the content or topic to play a role as a tutor so that the first user may play a role as a tutor for teaching the native language of the first user as a foreign language, or at a tutee's terminal, transmitting a video chat request for the content or topic so that the second user may play a role as a tutee to learn the native language of the first user as a foreign language;
at the tutor's terminal, accepting the video chat request in response to the video chat request from the tutee's terminal or at the tutee's terminal, accepting the video chat request in response to the video chat request from the tutor's terminal;
at the tutee's terminal, when the video chat request is accepted, paying a predetermined cost for the video chat to the tutor's terminal, and at the online foreign language education server, establishing a video chat session between the tutor's terminal and the tutee's terminal so that the first user and the second user can perform the video chat with each other,
wherein the step at the online foreign language education server of posting online a user profile previously stored in a user profile database including the age, gender, and nationality of a user, a native language, whether the user is a tutor or a tutee, a subject foreign language, the proficiency level of the subject foreign language, and whether the user is bilingual, together with a predetermined content or topic designated by a corresponding user in real time comprises steps of:
at the online foreign language education server, searching a user and providing the result to the corresponding tutor's terminal or tutee's terminal so that the video chat is performed between peers who are different by less than a predetermined age difference based on the age included in the user profile,
at the tutee's terminal, when the video chat request is accepted, paying a predetermined cost for the video chat to the tutor's terminal, and wherein the step at online foreign language education server of establishing a video chat session between the tutor's terminal and the tutee's terminal so that the first user and the second user may perform video chat with each other comprises,
in order to allow the second user to pay a cost for the video chat education to the first user, depositing a predetermined amount received from the tutee's terminal, changing the deposited amount into a virtual currency, and providing the changed virtual currency to the tutee's terminal, and when the tutee's terminal pays the cost using the virtual currency, providing the corresponding virtual currency to the tutor's terminal.

4. The method of claim 3, further comprising, when the tutor's terminal makes a request to change the provided virtual currency into real money and withdraw the money, at the online foreign language education server, changing the virtual currency into real money and providing the real money, and in order to use it for peers of underdeveloped region according to a predetermined criterion, receiving, from the tutor's terminal, a donation of a certain the amount of the changed real money based on a rate as designated by the first user.
